# FASCICULE DE BREVET EUROPEEN

(11) **EP 3 877 799 B1**
(45) Date de publication et mention de la délivrance du brevet: **03.01.2024**
(21) Numéro de dépôt: 19818222.2
(22) Date de dépôt: 07.11.2019
(51) Int. Cl.: G02B 26/08, G02B 27/64

(54) **DISPOSITIF DE POINTAGE OPTIQUE BI-AXE**
OPTISCHE ZEIGEVORRICHTUNG MIT ZWEI ACHSEN
DUAL AXIS OPTICAL POINTING DEVICE

(30) Priorité: 09.11.2018 FR 1860379
(43) Date de publication de la demande: 15.09.2021
(73) Titulaire: Airbus Defence and Space SAS, 31402 Toulouse Cedex 4 (FR)
(72) Inventeur: TAJAN, Florent, 31402 Toulouse Cedex 4 (FR)
(74) Mandataire: Plasseraud IP
(86) Numéro de dépôt international: PCT/FR2019/052645
(87) Numéro de publication internationale: WO 2020/094991

(56) Documents cités:
- EP-A1- 0 565 904
- CN-A- 103 104 882
- GB-A- 2 254 936
- JP-A- S63 305 209
- US-A- 4 027 540
- US-A- 5 115 355
- US-A- 5 887 823
- TALMOR AMNON G ET AL: "Two-axis gimbal for air-to-air and air-to-ground laser communications", PROCEEDINGS OF SPIE; [PROCEEDINGS OF SPIE ISSN 0277-786X VOLUME 10524], SPIE, US, vol. 9739, 15 mars 2016 (2016-03-15), pages 97390G-97390G, XP060065588, DOI: 10.1117/12.2218097 ISBN: 978-1-5106-1533-5
- MILLER ERIC D ET AL: "A prototype coarse pointing mechanism for laser communication", PROCEEDINGS OF SPIE; [PROCEEDINGS OF SPIE ISSN 0277-786X VOLUME 10524], SPIE, US, vol. 10096, 24 février 2017 (2017-02-24), pages 100960S-100960S, XP060083221, DOI: 10.1117/12.2264086 ISBN: 978-1-5106-1533-5

## Description

### DOMAINE DE L'INVENTION

L'invention concerne un dispositif de pointage bi-axe, c'est-à-dire capable de pointer une cible selon deux axes. L'invention s'applique notamment au pointage d'une cible par une caméra ou un faisceau laser depuis un satellite, que la cible se trouve sur la Terre ou ailleurs dans l'espace.

### ETAT DE LA TECHNIQUE

Pour pouvoir pointer une cible mobile depuis un satellite dans un grand champ de vision, il est nécessaire de pouvoir orienter l'axe optique de l'instrument optique utilisé selon deux axes. Pour pouvoir assurer cette orientation, deux approches sont possibles.

Une première approche consiste à monter l'instrument optique (caméra, source laser) sur un mécanisme orientable autour de deux axes, de manière à rendre l'instrument optique mobile et que ce soit cet instrument qui pointe la cible. L'utilisation de ce type de solution dans un satellite n'est toutefois pas aisée ; notamment car les instruments optiques sont le plus souvent recouverts de protections thermiques et de ce fait toute manipulation ou déplacement est rendue plus complexe. En outre, les instruments optiques peuvent être très lourds et encombrants, et de ce fait difficilement déplaçable, ce qui complique l'implémentation de cette approche. Enfin il est également nécessaire de connecter les instruments optiques à un contrôleur pour le transfert des données acquises, cette connexion étant réalisée au moyen d'un harnais mobile qui peut créer un couple résistif et s'user avec le temps et le nombre de cycles d'utilisation ou de déplacement.

La deuxième approche consiste à maintenir l'instrument optique selon un emplacement et une orientation fixes, et à utiliser un dispositif de pointage en sortie de l'instrument, ce dispositif comprenant un ou plusieurs miroirs mobiles pour pouvoir ensuite orienter l'axe optique de l'instrument selon les directions voulues.

On connaît par exemple dispositifs de pointage comprenant un seul miroir mobile en rotation selon deux axes différents, le plus souvent orthogonaux. Cette solution présente néanmoins l'inconvénient d'imposer l'utilisation d'un miroir de grande taille et de masse élevée pour pouvoir obtenir un champ d'observation important.

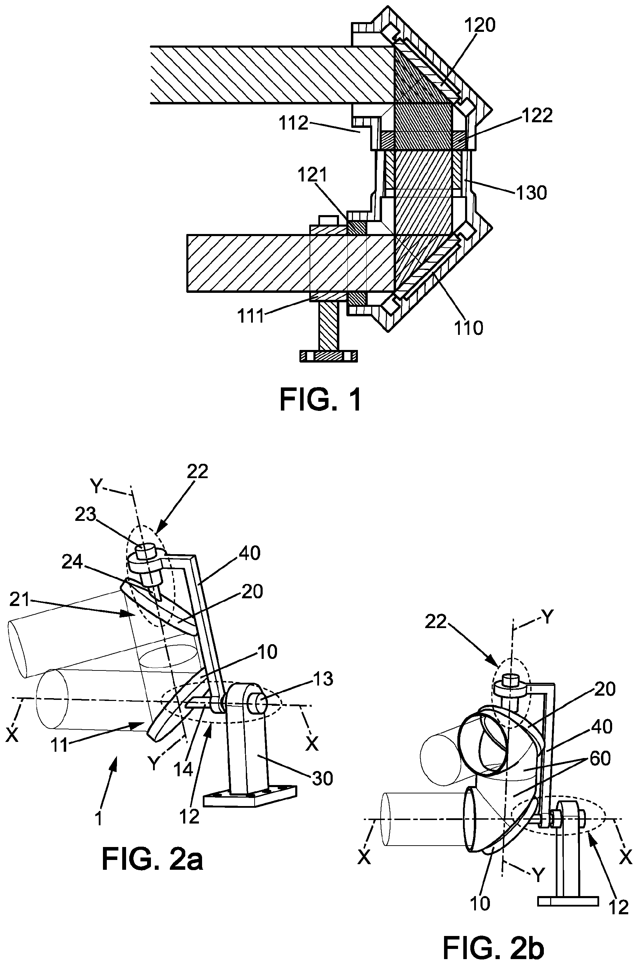

On connaît d'autres dispositifs de pointage du type périscope tel que celui représenté schématiquement sur la figure 1. Ce dispositif comprend un premier miroir 100 monté mobile en rotation autour d'un premier axe, et un deuxième miroir 101 monté mobile en rotation autour d'un deuxième axe orthogonal au premier. Chaque miroir est incliné de 45° par rapport à son axe de rotation.

Dans un tel périscope biaxe, les actionneurs 110, 120 des miroirs sont creux de manière à pouvoir s'étendre autour du faisceau. Plus précisément, chaque actionneur comporte un stator cylindrique 111, 121 dans lequel est inséré, en étant mobile en rotation, un rotor également cylindrique 112, 122, au travers duquel passe le faisceau avant de parvenir sur le miroir. Le miroir est assemblé au rotor de façon solidaire de sorte que la rotation du rotor autour de son axe entraine la rotation du miroir.

Sur la figure 1, on constate également que la structure porteuse 130 du deuxième miroir et de son actionneur est également montée sur le rotor du premier actionneur. Cette structure porteuse qui remplit également un rôle de confinement optique du faisceau.

Ce type de solution a été adopté dans l'optique de limiter l'encombrement du dispositif de pointage. En effet, les actionneurs sont ainsi intégrés à la structure porteuse et on obtient dans un minimum de place toutes les fonctionnalités requises en termes de cinématique, de tenue structurelle et de protection optique.

Cette solution n'est cependant pas sans inconvénient, puisque de ce fait le dimensionnement des actionneurs est complètement dépendant de la taille du faisceau. Pour obtenir des faisceaux de grand diamètre, ceci entraine logiquement le recours à des actionneurs lourds et coûteux. Les solutions technologiques disponibles pour ce type d'actionneurs sont également moins nombreuses.

De plus la structure porteuse tubulaire montée sur le premier actionneur et qui porte le deuxième miroir et son actionneur doit également être plus grande, et donc plus lourde et plus coûteuse.

Il existe donc un besoin pour un mécanisme de pointage ne présentant pas ces inconvénients, et permettant en particulier l'utilisation de miroirs de dimensions accrues pour le pointage de faisceaux plus larges, et qui présentent moins de contraintes dans le choix des actionneurs.

Les documents EP 0 565 904 A1, CN 103 104 882 A, US 4 027 540 A, US 5 115 355 A et GB 2 254 936 décrivent l'état de la technique de la présente invention.

### PRESENTATION DE L'INVENTION

Eu égard à ce qui précède, l'invention a pour but de pallier au moins en partie les inconvénients de l'art antérieur.

En particulier, un but de l'invention est de proposer un mécanisme de pointage biaxe plus léger et moins coûteux que l'art antérieur.

A cet égard, l'invention a pour objet un dispositif de pointage selon la revendication 1.

Dans des modes de réalisation, le stator de chaque actionneur est cylindrique et le rotor est un arbre plein monté en rotation dans le stator respectif. Avantageusement, chaque actionneur s'étend selon l'axe de rotation du miroir qu'il entraine.

Dans des modes de réalisation, le rotor de chaque actionneur est assemblé à une face principale opposée à la face principale réfléchissante du miroir correspondant. Dans des modes de réalisation, le dispositif de pointage comporte en outre un support adapté pour être fixé sur une paroi de support, le support portant le premier actionneur.

Avantageusement, mais facultativement, chaque miroir est incliné de 45° par rapport à son axe de rotation.

Avantageusement, mais facultativement, le dispositif de pointage comprend en outre deux baffles solidaires respectivement de chaque miroir.

Dans un mode de réalisation, les axes de rotation des miroirs forment entre eux un angle compris entre 65 et 75°.

L'invention a également pour objet un ensemble selon la revendication 7. Dans un mode de réalisation de cet ensemble, les axes de rotation des miroirs forment entre eux un angle compris entre 65 et 75°.

Dans un mode de réalisation, le dispositif de verrouillage comprend une protubérance, et un organe de retenue de la protubérance, l'un de la protubérance et de l'organe de retenue de la protubérance étant monté solidaire du stator du deuxième actionneur, et l'autre étant monté sur la paroi de support, l'organe de retenue de la protubérance étant adapté pour recevoir la protubérance engagée ou en appui dans l'organe de retenue, de manière à empêcher une rotation autour du premier axe dans un premier sens de rotation.

Dans un mode de réalisation, le dispositif de verrouillage comprend un crochet monté rotatif autour de l'axe de rotation du deuxième miroir, et un organe de retenue du crochet monté sur la paroi de support, adapté pour recevoir le crochet lorsque la protubérance est engagée ou en appui dans l'organe de retenue de la protubérance, et pour empêcher une rotation autour du premier axe dans un deuxième sens de rotation opposé au premier.

Dans un mode de réalisation, la paroi de support comporte un orifice traversant conformé de telle sorte à autoriser le passage du dispositif de pointage d'une première position dans laquelle le second miroir et son actionneur s'étendent du même côté de la paroi de support que le premier miroir, et une position dans laquelle ils s'étendent du côté opposé de la paroi de support par rapport au premier miroir.

Dans un mode de réalisation, l'ensemble comprend en outre un émetteur/récepteur laser, le dispositif de pointage étant adapté pour orienter un faisceau laser généré par l'émetteur/récepteur laser vers une cible déterminée ou pour orienter un faisceau laser provenant de la cible vers l'émetteur/récepteur laser.

Dans un mode de réalisation, l'ensemble comprend en outre un capteur optique, et le dispositif de pointage est adapté pour orienter l'axe optique du capteur optique vers une cible déterminée.

Le dispositif de pointage selon l'invention comporte deux miroirs, chacun entrainé autour d'un axe de rotation par un actionneur respectif, au moins l'un des actionneurs étant situé du côté opposé au miroir qu'il entraine par rapport à la surface réfléchissante du miroir.

De ce fait, l'actionneur n'a pas besoin d'être traversé par le faisceau, et donc pas besoin d'être creux. En particulier, le rotor peut être un arbre plein relié à un miroir sur le côté du miroir opposé à sa surface réfléchissante. Ceci réduit fortement les contraintes de dimensionnement des actionneurs puisque leur taille ne dépend plus des dimensions du faisceau. Les actionneurs pouvant être utilisés pour ce dispositif de pointage peuvent donc être plus compacts et plus légers. Les possibilités techniques pour l'implémentation des actionneurs sont également plus diversifiées, et les actionneurs peuvent de ce fait être moins onéreux.

On peut également réduire la masse de la structure de support du deuxième miroir et du deuxième actionneur. Cette structure peut être un bras de liaison et non plus une structure tubulaire entourant le faisceau. La fonctionnalité de protection optique contre la lumière parasite peut être assurée par des baffles légers (par exemple en aluminium) et non plus par la structure porteuse.

Enfin, puisque le deuxième actionneur peut être porté par un bras de liaison extérieur au faisceau optique, il n'est pas positionné entre les deux miroirs, ce qui permet de rapprocher les miroirs et donc d'augmenter la compacité du dispositif de pointage.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1, déjà décrite, représente un dispositif de pointage biaxe de l'art antérieur,
- Les figures 2a et 2b représentent schématiquement un exemple de dispositif de pointage biaxe, respectivement avec et sans baffles non compris dans l'invention revendiquée
- Les figures 3a et 3b représentent schématiquement un exemple de dispositif de pointage biaxe, respectivement avec et sans baffles,
- Les figures 4a à 4c représentent schématiquement un ensemble comprenant un dispositif de pointage monté sur une paroi,
- Les figures 5a et 5b représentent deux exemples de systèmes optiques intégrant un dispositif de pointage.
- La figure 6 représente un exemple de terminal laser comprenant un dispositif de pointage selon l'invention.

### DESCRIPTION DETAILLEE D'AU MOINS UN MODE DE REALISATION DE L'INVENTION

### Dispositif de pointage

Dans toute la suite, on désigne par le terme « rayon lumineux » tout rayon électromagnétique appartenant au spectre de la lumière visible, c'est-à-dire présentant une longueur d'onde comprise entre 400 et 800 nm, ou appartenant au spectre de l'infrarouge, c'est-à-dire présentant une longueur d'onde comprise entre 800 nm et 0,1 mm, Le terme « faisceau optique » est également utilisé pour désigner un faisceau formé par ces rayons.

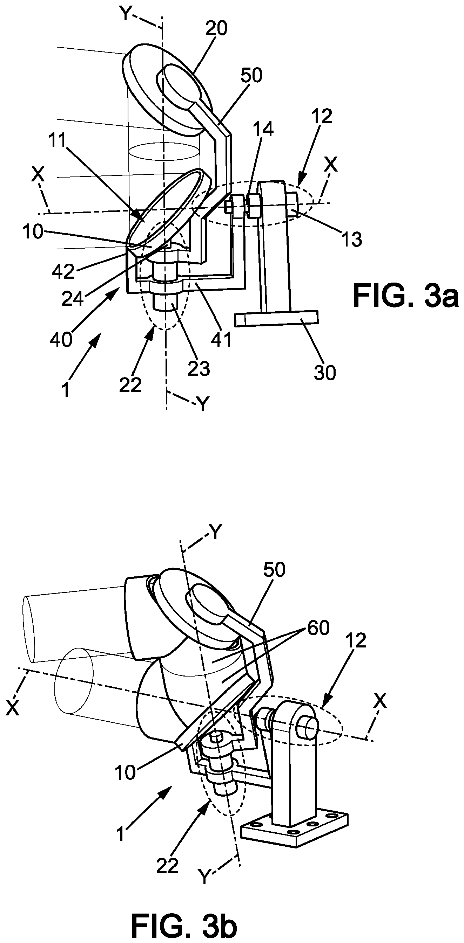

On va maintenant décrire un dispositif de pointage 1 biaxe en référence aux figures 2a, 2b, 3a et 3b.

Le dispositif de pointage 1 comprend un premier miroir 10, comportant une face principale réfléchissante 11, et un deuxième miroir 20, comportant une face principale réfléchissante 21. Les miroirs peuvent être plans ou convergents.

Le premier miroir 10 est adapté pour réfléchir des rayons lumineux vers ou depuis un point fixe. Le point fixe peut être par exemple une source laser 90, auquel cas le miroir 10 réfléchit des rayons lumineux provenant de la source, ou elle peut être un capteur optique 91, auquel cas le miroir 10 réfléchit des rayons lumineux vers le capteur optique.

Le deuxième miroir est adapté pour réfléchir des rayons lumineux réfléchis par le premier miroir 10 vers une cible mobile (non représentée sur les figures), et inversement.

Le dispositif de pointage 1 comprend également un premier actionneur 12, adapté pour entrainer en rotation le premier miroir 10 autour d'un axe X-X, cet axe étant orienté vers le point fixe de manière à assurer que quelle que soit la position du miroir autour de cet axe X-X, il soit toujours en mesure de réfléchir des rayons lumineux vers ou depuis le point fixe.

Le dispositif de pointage 1 comprend un deuxième actionneur 22, adapté pour entrainer en rotation le deuxième miroir 20 autour d'un axe Y-Y. L'axe Y-Y est orienté vers le premier miroir, c'est-à-dire qu'il s'étend entre le deuxième miroir 20 et le premier miroir 10, et de préférence entre le centre du deuxième miroir et le centre du premier miroir, de manière à assurer que, quelle que soit la rotation du deuxième miroir 20 autour de l'axe Y-Y, celui-ci puisse toujours réfléchir des rayons lumineux réfléchis par le premier miroir 10 ou vers celui-ci.

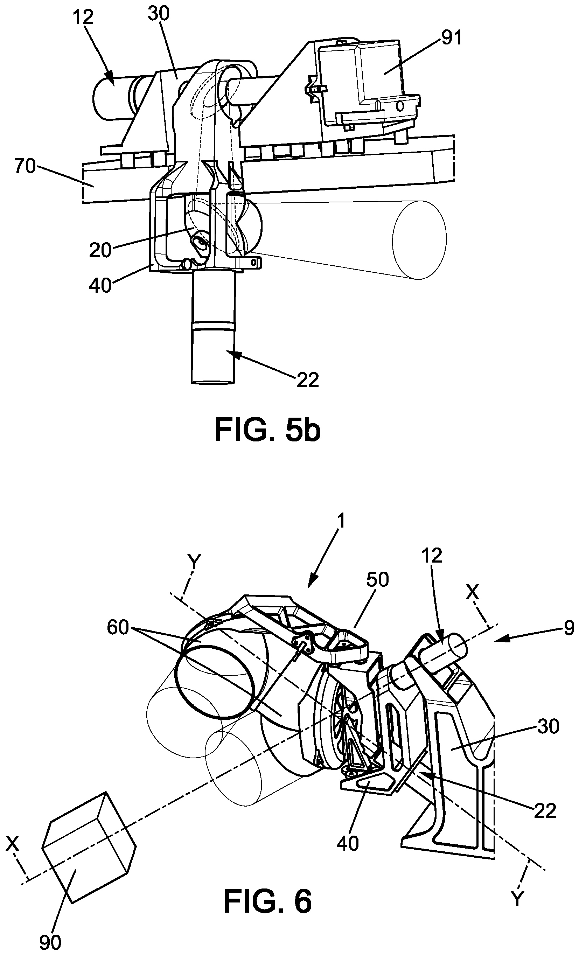

Selon l'invention, les axes X-X et Y-Y forment entre eux un angle compris entre 60 et 75°, comme c'est le cas par exemple sur la figure 6. Cet angle entre les axes permet de couvrir un champ de vue acceptable tout en réduisant l'encombrement du dispositif de pointage par rapport à des valeurs d'angles supérieures à cette gamme. Le champ de vue dépend de l'application envisagée, mais on note que la valeur d'angle donnée fournit un champ de vue acceptable pour un dispositif de pointage monté sur un satellite en orbite basse (ou LEO pour l'acronyme anglais Low Earth Orbit), c'est-à-dire à une altitude inférieure à 2000 km et typiquement comprise entre 500 km et 1200 km. Pour des altitudes de l'ordre de 1200 km, cet angle permet d'obtenir un champ de vue couvrant l'intégralité de la Terre. Pour des altitudes inférieures, il permet de couvrir une zone d'intérêt sans recourir à des angles rasants, que ce soit en observation ou en communication, qui impliquent une dégradation du signal liée à l'atmosphère (pour des applications de communication) ou à la déformation de la zone observée.

Avantageusement, mais facultativement, l'angle formé par les axes de rotation des miroirs est compris dans la plage 65-75°, et par exemple égal à 70°, qui correspond à un optimum en termes d'encombrement et de champ de vue autorisé.

Chaque miroir est incliné par rapport à son axe de rotation. Par exemple, les miroirs peuvent être inclinés de 45° par rapport à leur axe de rotation. Cet angle peut varier, par exemple sur une plage de plus ou moins 15° en fonction des besoins de champs de vue et d'encombrement du dispositif.

Afin d'assurer qu'un rayon lumineux incident sur l'un des miroirs soit réfléchi vers l'autre miroir, le premier actionneur 12 est adapté pour entrainer en rotation le deuxième actionneur 22 ainsi que le deuxième miroir autour de l'axe X-X.

Avantageusement, chaque actionneur comporte un stator et un rotor. On a ainsi représenté sur les figures un premier actionneur 12 comprenant un stator 13 et un rotor 14, et un deuxième actionneur 22 comprenant un stator 23 et un rotor 24.

Dans ce cas, le deuxième actionneur 22 ainsi que le deuxième miroir 20 sont montés sur le rotor 14 du premier actionneur. Plus précisément, le stator 23 du deuxième actionneur 22 est solidaire en rotation du rotor 14 du premier actionneur, et le deuxième miroir 20 est solidaire en rotation du rotor 24 du deuxième actionneur.

Le dispositif de pointage est donc configuré de sorte qu'un faisceau optique émanant d'un point fixe (instrument optique ou laser) et incident sur le premier miroir soit réfléchi vers le second miroir, puis réfléchi par le second miroir vers un point cible. Le point cible est variable en fonction des rotations des miroirs. D'après le principe du retour inverse de la lumière, le même trajet est suivi par un faisceau provenant du point cible vers le point fixe.

Enfin le dispositif de pointage comprend également un support 30, adapté pour être monté sur une paroi de support, le support 30 portant le stator 13 du premier actionneur 12.

Dans le dispositif de pointage 1, au moins l'un des actionneurs 12, 22 s'étend du côté opposé au miroir qu'il actionne par rapport à la face principale réfléchissante du miroir. En d'autres termes, un miroir définit un plan délimitant deux demi-espaces, dont un demi-espace du côté de la face réfléchissante et un demi-espace du côté opposé à la face réfléchissante, et l'actionneur se situe dans ce dernier demi-espace.

De ce fait, l'actionneur ne se trouve pas sur la trajectoire d'un faisceau optique incident et/ou réfléchi par le miroir.

La conception de l'actionneur peut donc être simplifiée et indépendante de la taille du faisceau. Notamment l'actionneur 12, 22 peut alors comprendre un stator cylindrique et un rotor de la forme d'un arbre plein monté en rotation dans le stator. De préférence, cette conception est choisie pour les deux actionneurs 12 et 22, qui comprennent donc tous les deux un stator cylindrique et un rotor plein monté en rotation dans le stator. Les actionneurs peuvent également comprendre, outre le moteur comprenant le rotor et le stator, des éléments d'actionnements ou de transmission supplémentaires tels que des engrenages, réducteurs planétaires ou épicycloïdaux, vis sans fin, etc.

Avantageusement, chaque actionneur 12, 22 - et donc le rotor et le stator de l'actionneur - s'étend selon l'axe de rotation du miroir qu'il entraine.

Dans une première variante non comprise dans l'invention revendiquée, dont un exemple est représenté sur les figures 2a et 2b, chacun des deux actionneurs 12, 22 est situé du côté opposé au miroir qu'il entraine en rotation par rapport à la face réfléchissante du miroir. Le rotor 14, 24 d'un miroir est alors avantageusement assemblé à la face arrière, opposée à la face réfléchissante, du miroir.

Dans ce cas, le stator 23 du deuxième actionneur est assemblé au rotor 14 du premier actionneur par l'intermédiaire d'un bras de liaison 40. Dans le cas où les axes X-X et Y-Y sont orthogonaux, le bras de liaison 40 est typiquement un bras en L, coudé à 90, et relié au stator 23 et au rotor 14 par respectivement chacune de ses extrémités. Si les axes X-X et Y-Y ne sont pas orthogonaux, le bras de liaison 40 peut être coudé d'un angle différent de 90°.

Dans une deuxième variante, dont un exemple est représenté sur les figures 3a et 3b, un seul actionneur (le premier actionneur 12 sur les figures 3a et 3b) est situé du côté opposé du miroir qu'il entraine en rotation par rapport à sa face réfléchissante, l'autre actionneur se trouvant du côté de la face réfléchissante du miroir qu'il entraine en rotation, mais cet actionneur se trouve alors du côté opposé à la face réfléchissante de l'autre miroir (donc le premier miroir sur les figures 3a et 3b) afin de ne pas se trouver entre les deux miroirs et donc sur la trajectoire d'un faisceau optique.

Dans cette variante, le dispositif de pointage 1 comprend donc également un bras de liaison 40 reliant le stator 23 du deuxième actionneur au rotor 14 du premier actionneur. Dans les cas où les axes X-X et Y-Y sont orthogonaux, le bras de liaison 40 comporte une portion 41 en L, coudée à 90°, reliant à une extrémité le rotor 14 du premier actionneur et à l'autre extrémité le stator 23 du deuxième actionneur. Si les axes X-X et Y-Y ne sont pas orthogonaux, la portion 41 est coudée d'une valeur d'angle différente de 90°, adaptée pour relier rigidement entre eux le rotor 14 et le stator 23. Par rigide, on entend une liaison dépourvue de charnière et non susceptible de se déformer élastiquement en utilisation, de sorte que les deux extrémités d'un bras de liaison présentent des positions relatives fixes l'une par rapport à l'autre.

Le bras de liaison 40 comporte en outre une deuxième portion 42, reliée à la première portion par une extrémité et au premier miroir 10 par l'autre extrémité. Cette deuxième portion 42 peut être reliée au premier miroir 10 au niveau de la face du miroir opposée à la face réfléchissante, ou au niveau du bord périphérique du miroir. De la sorte le bras de liaison 40 permet de monter le premier miroir 10 et le stator 23 du deuxième actionneur en rotation autour de l'axe X-X, en déportant le stator 23, toujours aligné selon l'axe Y-Y, du côté du premier miroir 10 opposé à sa face réfléchissante.

Le dispositif de pointage 1 comporte alors un deuxième bras de liaison 50 adapté pour relier de façon rigide le deuxième miroir au rotor 24 du deuxième actionneur. Une première extrémité du deuxième bras de liaison 50 peut être assemblée à la face arrière du deuxième miroir, ou éventuellement à son bord périphérique, et l'autre extrémité peut être montée rotative au rotor 24. Le deuxième bras de liaison 50 est donc monté en rotation autour de l'axe Y-Y. Il présente de préférence une forme globalement coudée ou arrondie, adaptée pour que le bras 50 contourne un volume centré sur l'axe Y-Y et comprenant les deux miroirs et le faisceau s'étendant entre eux.

Cette variante de réalisation présente l'avantage, par rapport à la première décrite en référence aux figures 2a et 2b, de rapprocher le deuxième actionneur 22 de l'axe de rotation X-X du premier miroir, et donc de réduire l'encombrement et le porte-à-faux du dispositif de pointage 1. L'équilibre du dispositif de pointage 1 est donc meilleur, ce qui présente une importance accrue dans le domaine du spatial car le dispositif doit tenir les efforts liés au lancement du satellite dans lequel il est embarqué.

Dans les deux variantes décrites ci-avant, on comprend que les actionneurs 12, 22 ainsi que les bras de liaison peuvent être de taille et de masse réduites, par rapport à la structure comprenant les actionneurs creux décrite dans l'art antérieur. De préférence, les bras de liaison sont formés dans un matériau léger et présentant un faible coefficient de dilatation thermique, comme par exemple l'invar ou le Carbure de Silicium SiC.

Avantageusement, comme représenté sur les figures 2b et 3b, le dispositif de pointage peut comprendre des baffles 60 montés sur chaque miroir 10, 20, un baffle étant une paroi opaque de protection contre la lumière parasite. Comme visible sur les figures 2b et 3b, chaque baffle 60 peut avantageusement présenter une forme coudée de manière à protéger le faisceau incident et réfléchi par chaque miroir.

De plus, les baffles n'ayant aucun rôle de soutien structurel contrairement au périscope décrit dans l'art antérieur, ceux-ci peuvent être réalisés en un matériau léger pour encore simplifier et alléger le dispositif de pointage. Typiquement, les baffles peuvent être formés d'une fine couche d'aluminium, par exemple de l'ordre de 0,5 à 2 mm d'épaisseur.

### Montage du dispositif de pointage

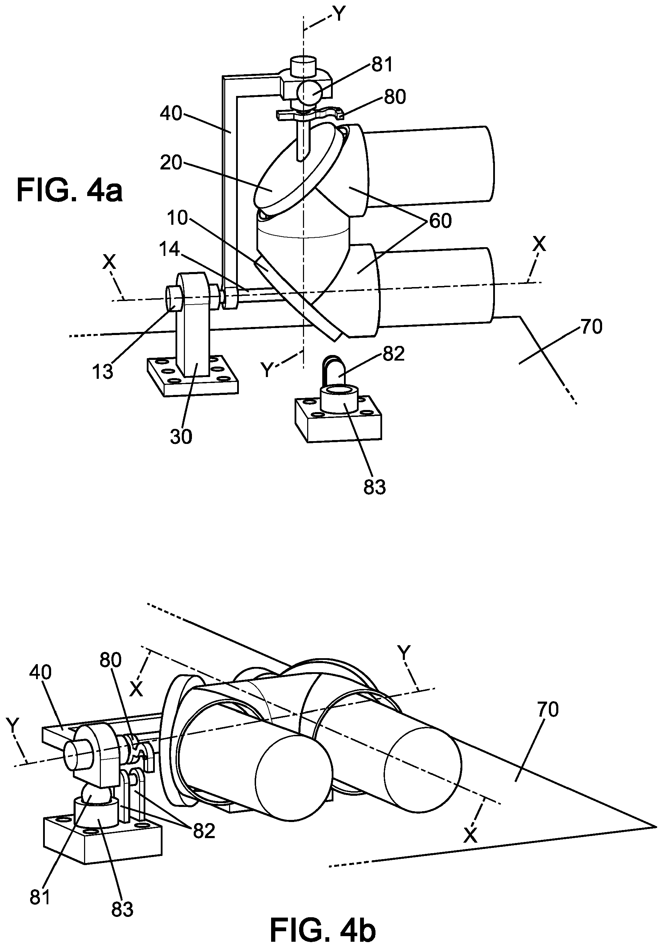

En référence aux figures 4a à 4c, le dispositif de pointage 1 est avantageusement assemblé à une paroi de support 70, cette paroi de support 70 étant typiquement une paroi de support commune avec l'instrument optique auquel est associé le dispositif de pointage. La paroi de support peut par exemple être une paroi de support spécifique à l'ensemble formé par le dispositif de pointage et l'instrument optique, ou encore une paroi externe d'un satellite.

L'ensemble comportant la paroi de support 70 et le dispositif de pointage 1 comprend avantageusement un dispositif de verrouillage (ou clamping en anglais) destiné à immobiliser le dispositif de pointage 1 lors du lancement du satellite, ceci afin d'éviter toute dégradation liée aux vibrations causées par le lancement.

Plus précisément, le dispositif de verrouillage est adapté pour arrêter en rotation l'axe de rotation X-X, puisque c'est lui qui porte les éléments pouvant se trouver en porte-à-faux.

A cet égard, le dispositif de verrouillage comporte un crochet 80 et une protubérance, par exemple une sphère 81 qui sont portés par le dispositif de pointage 1. Le crochet 80 est monté rotatif autour de l'axe de rotation Y-Y du deuxième miroir 20, en étant monté solidaire en rotation du rotor 24 du deuxième actionneur 22. La sphère 81 est solidaire du stator 23 du deuxième actionneur ou du bras de liaison 40.

Le dispositif de verrouillage comporte en outre un organe de retenue 82 du crochet et un organe de retenue 83 de la sphère qui sont montés sur la paroi de support 70.

L'organe de retenue 83 peut être un cône ou un cylindre adapté pour recevoir la sphère engagée ou en appui dans l'organe de retenue, de manière à arrêter la rotation du premier axe X-X dans un premier sens de rotation (en l'espèce, vers la surface d'appui).

L'organe de retenue 81 du crochet peut être, comme sur l'exemple des figures 4a à 4c, une tige pouvant être reçue dans le crochet 80, la tige étant terminée à ses deux extrémités par deux lamelles 82 de liaison à la paroi de support 70, les lamelles 82 étant conformées pour empêcher que le crochet ne puisse se dégager de la tige 81 en cas de vibrations. En variante, l'organe de retenue 81 pourrait être formé par un arceau relié à ses extrémités à la paroi de support et qui s'engage dans le crochet. Dans tous les cas une fois que la sphère est engagée dans l'organe de retenue 83, le crochet peut être à son tour engagé avec l'organe de retenue 81 pour empêcher la rotation du premier axe X-X dans un deuxième sens de rotation opposé au premier.

Sur les figures 4a à 4c on a représenté un exemple de cinématique de verrouillage du dispositif de verrouillage. Sur la figure 4a, le dispositif de pointage 1 est représenté dans un exemple quelconque de position d'utilisation, dans laquelle l'axe X-X du premier miroir s'étend parallèlement à la paroi de support 70, et l'axe Y-Y du deuxième miroir s'étend perpendiculairement à cette paroi 70. On comprend que la position d'utilisation est très variable en fonction de la position de la cible à pointer.

Sur la figure 4b, le deuxième miroir et son actionneur sont rabattus contre la paroi de support 70 par une rotation du rotor 13 du premier actionneur, ce qui ramène l'axe Y-Y de rotation du deuxième miroir parallèle à la paroi de support (les axes X-X et Y-Y définissent alors un plan qui est sensiblement parallèle à la paroi de support), et amène la sphère 81 à être retenue dans l'organe 83.

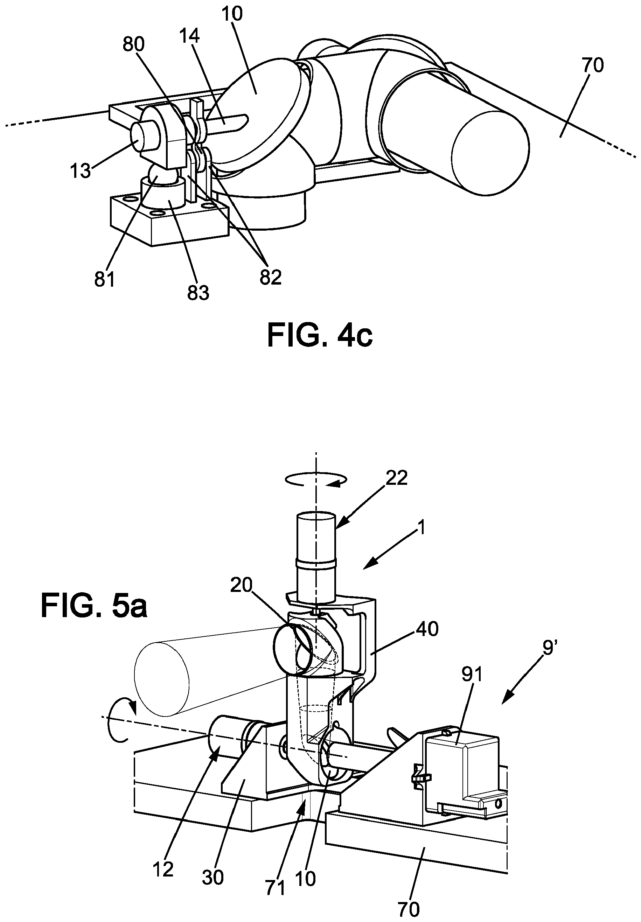

Enfin, sur la figure 4c, le crochet porté par le rotor 24 du deuxième miroir 20 est pivoté pour s'engager dans l'organe de retenue 84. Le dispositif de pointage 1 est alors maintenu dans cette position de verrouillage. La cinématique inverse est mise en oeuvre pour déverrouiller le dispositif de pointage 1.

En variante, la sphère 81 et l'organe 83 pourraient être inversés pour qu'une sphère soit portée par la paroi de support et un organe de verrouillage adapté pour recevoir la sphère soit monté solidaire au bras de liaison 40, pour former un organe de verrouillage équivalent.

Dans le cas d'un ensemble comprenant une paroi de support, un dispositif de pointage et le dispositif de verrouillage qui vient d'être décrit, il est préférable que l'angle formé entre les axes de rotation des miroirs soit supérieur à 60°, avantageusement compris entre 65 et 75°. En effet, la présence de l'organe de verrouillage et notamment des éléments rapportés sur la paroi de support, et qui sont donc saillants par rapport à cette paroi, impose que la plage de positions opérationnelles du dispositif de pointage, c'est-à-dire l'ensemble des positions pouvant être adoptées par les deux miroirs pour couvrir tout le champ de vue souhaité, ne comprennent pas une position dans laquelle l'un des miroirs buterait contre l'un des éléments du dispositif de verrouillage. Or, le fait de diminuer l'angle formé par les axes de rotation des miroirs augmente la plage opérationnelle de rotation des actionneurs des miroirs pour couvrir un même champ de vue, et donc accroît le risque de conflit entre cette plage opérationnelle et le dispositif de verrouillage.

Par ailleurs, et comme représenté schématiquement en figures 5a et 5b, la paroi de support 70 peut être adaptée pour conférer un important champ de vue au dispositif de pointage en autorisant un débattement angulaire du dispositif de pointage autour du premier axe de rotation X-X. A cet égard, la paroi de support 70 comprend avantageusement un orifice traversant 71 autorisant le passage du dispositif de pointage 1 d'une position dans laquelle le deuxième actionneur et le deuxième miroir sont situés d'un premier côté de la paroi de support (figure 6a), typiquement le côté où se trouve le premier miroir, à une position dans laquelle le deuxième actionneur et le deuxième miroir sont situés du côté opposé de la paroi de support 70 (figure 6b). En particulier, l'orifice 71 doit être dimensionné pour pouvoir recevoir, en largeur et en longueur, le deuxième actionneur, le deuxième miroir, et le ou les bras de liaison.

Avantageusement, le débattement angulaire ainsi permis par l'orifice traversant 71 est d'au moins 180° autour du premier axe de rotation X-X.

Avantageusement comme représenté sur les figures 5a et 5b, le dispositif de pointage 1 est monté à proximité d'un bord de la paroi de support 70, l'axe X-X de rotation du premier miroir 10 étant parallèle à ce bord, et l'orifice 71 peut être une encoche débouchant sur ledit bord.

Dans l'exemple représenté sur les figures 5a et 5b, le champ de vue du dispositif de pointage s'étend donc sur les trois/quarts d'une sphère, soit sur 270° selon le premier axe X-X, et 180° sur le deuxième axe Y-Y.

Le dispositif de pointage 1 décrit ci-avant peut avantageusement être utilisé dans un système de pointage laser 9 comprenant un émetteur/récepteur laser 90, comme par exemple sur la figure 6. Dans le cas d'une émission, le dispositif de pointage 1 est alors positionné de sorte que le faisceau laser émis soit incident sur le premier miroir. La rotation des deux miroirs permet ensuite de pointer le faisceau laser vers une cible voulue. Inversement, dans le cas d'une réception, le deuxième miroir est orienté vers source et réfléchit le laser vers le premier miroir, qui le réfléchir à son tour vers le récepteur. Sur la figure 6, le dispositif de pointage 1 représenté présente une architecture conforme à la deuxième variante décrite en référence aux figures 3a et 3b. Toutefois un système de pointage laser 9 n'est pas limité à cet exemple de réalisation du dispositif de pointage 1.

Selon une autre application préférée, le dispositif de pointage 1 peut être utilisé dans un système de pointage optique 9' comprenant un capteur optique 91 comme une caméra (cas des figures 5a et 5b) ou un capteur de télescope. Dans ce cas, le dispositif de pointage est positionné de sorte qu'un faisceau réfléchi par le premier miroir parvienne au capteur optique 91. La rotation des deux miroirs permet de pointer le capteur optique vers la cible voulue. Sur les figures 5a et 5b, le dispositif de pointage représenté présente une architecture conforme à la première variante décrite en référence aux figures 2a et 2b. Toutefois un système de pointage optique 9' n'est pas limité à cet exemple de réalisation du dispositif de pointage 1.

## Revendications

1. Dispositif de pointage (1) comprenant :
- un premier miroir (10), comportant une face principale réfléchissante (11), et agencé pour réfléchir des rayons respectivement depuis ou vers un point fixe (90, 91),
- un premier actionneur (12) adapté pour entrainer en rotation le premier miroir (10) autour d'un premier axe (X-X) dirigé vers le point fixe (90,91),
- un deuxième miroir (20), comportant une face principale réfléchissante (21), et agencé pour réfléchir des rayons réfléchis par le premier miroir vers une cible mobile et inversement, et
- un deuxième actionneur (22) adapté pour entrainer en rotation le deuxième miroir (20) autour d'un deuxième axe (Y-Y), orienté vers le premier miroir (10),
dans lequel chaque actionneur (12, 22) comporte un rotor et un stator, le premier miroir (10) est solidaire en rotation du rotor (14) du premier actionneur (12), le deuxième miroir est solidaire en rotation du rotor (24) du deuxième actionneur (22), le premier actionneur (12) est en outre adapté pour entraîner en rotation le deuxième actionneur (22) et le deuxième miroir (20) autour du premier axe (X-X), le stator (23) du deuxième actionneur (22) étant monté rotatif autour de l'axe de rotation (X-X) du premier miroir (10) par l'intermédiaire d'un bras de liaison (40) solidaire dudit stator (23) du deuxième actionneur (22) d'une part, et du rotor (14) du premier actionneur d'autre part,
le dispositif de pointage (1) étant **caractérisé en ce qu'**au moins un actionneur (12, 22) est disposé, relativement au miroir (10, 20) qu'il entraine en rotation, du côté opposé du miroir par rapport au côté de sa face principale réfléchissante (11, 21), **en ce que** les axes de rotation des miroirs forment entre eux un angle compris entre 60 et 75°, et
**en ce que** le premier miroir (10) est monté sur le bras de liaison (40), et le bras de liaison (40) est conformé de sorte que le deuxième actionneur (22) s'étende, selon l'axe de rotation (Y-Y) du deuxième miroir (20), du côté du premier miroir (10) opposé au côté de sa face principale réfléchissante (11), et le dispositif de pointage (1) comporte en outre un deuxième bras de liaison (50) reliant le deuxième miroir (20) et le rotor (24) du deuxième actionneur (22).

2. Dispositif de pointage (1) selon la revendication 1, dans lequel le stator de chaque actionneur (12,22) est cylindrique et le rotor est un arbre plein monté en rotation dans le stator respectif.

3. Dispositif de pointage (1) selon l'une des revendications précédentes, comportant en outre un support (30) adapté pour être fixé sur une paroi de support (70), le support (30) portant le premier actionneur (12).

4. Dispositif de pointage (1) selon l'une des revendications précédentes, comprenant en outre deux baffles (60) solidaires respectivement de chaque miroir (10, 20).

5. Dispositif de pointage selon l'une des revendications précédentes, dans lequel les axes de rotation des miroirs forment entre eux un angle compris entre 65 et 75°.

6. Ensemble comprenant un dispositif de pointage (1) selon l'une des revendications 1 à 5, et une paroi de support (70) sur laquelle est monté le dispositif de pointage (1),
l'ensemble comprenant en outre un dispositif de verrouillage (80, 81, 82, 83) adapté pour arrêter en rotation le premier axe de rotation (X-X) selon deux sens de rotation opposés, dans une position de verrouillage dans laquelle l'axe de rotation (Y-Y) du deuxième miroir (20) s'étend parallèlement à la paroi de support (70).

7. Ensemble selon la revendication précédente, dans lequel les axes de rotation des miroirs du dispositif de pointage forment entre eux un angle compris entre 65 et 75°.

8. Ensemble selon l'une des revendications 6 ou 7, dans lequel le dispositif de verrouillage comprend une protubérance (81), et un organe de retenue (83) de la protubérance (81), l'un de la protubérance (81) et de l'organe de retenue (83) de la protubérance étant monté solidaire du stator (23) du deuxième actionneur, et l'autre étant monté sur la paroi de support (70), l'organe de retenue de la protubérance étant adapté pour recevoir la protubérance engagée ou en appui dans l'organe de retenue (83), de manière à empêcher une rotation autour du premier axe (X-X) dans un premier sens de rotation.

9. Ensemble selon la revendication 8, dans lequel le dispositif de verrouillage comprend un crochet (80) monté rotatif autour de l'axe de rotation (Y-Y) du deuxième miroir 20, et un organe de retenue (84) du crochet monté sur la paroi de support (70), adapté pour recevoir le crochet (80) lorsque la protubérance (81) est engagée ou en appui dans l'organe de retenue (83) de la protubérance, et pour empêcher une rotation autour du premier axe (X-X) dans un deuxième sens de rotation opposé au premier.

10. Ensemble selon l'une des revendications 6 à 9, dans lequel la paroi de support comporte un orifice traversant (71) conformé de telle sorte à autoriser le passage du dispositif de pointage (1) d'une première position dans laquelle le second miroir (20) et son actionneur (22) s'étendent du même côté de la paroi de support (70) que le premier miroir (10), et une position dans laquelle ils s'étendent du côté opposé de la paroi de support (70) par rapport au premier miroir (10).

11. Ensemble selon l'une des revendications 6 à 10, comprenant en outre un émetteur/récepteur laser (90), le dispositif de pointage (1) étant adapté pour orienter le faisceau laser généré par l'émetteur/récepteur laser vers une cible déterminée ou pour orienter un faisceau laser provenant de la cible vers l'émetteur/récepteur laser.

12. Ensemble selon l'une des revendications 6 à 11, comportant en outre un capteur optique (91), le dispositif de pointage (1) étant adapté pour orienter l'axe optique du capteur optique vers une cible déterminée.

## Patentansprüche

1. Zeigevorrichtung (1) aufweisend:
- einen ersten Spiegel (10), der eine reflektierende Hauptfläche (11) aufweist und eingerichtet ist, um von einem festen Punkt (90, 91) herkommende Strahlen zu reflektieren oder Strahlen hin zu einem festen Punkt (90, 91) zu reflektieren,
- einen ersten Aktuator (12), der angepasst ist, um den ersten Spiegel (10) in Rotation um eine zu dem festen Punkt (90, 91) gerichtete erste Achse (X-X) zu versetzen,
- einen zweiten Spiegel (20), der eine reflektierende Hauptfläche (21) aufweist und eingerichtet ist, um Strahlen, die von dem ersten Spiegel reflektiert worden sind, hin zu einem mobilen Ziel zu reflektieren und umgekehrt, und
- einen zweiten Aktuator (22), der angepasst ist, um den zweiten Spiegel (20) in Rotation um eine zu dem ersten Spiegel (10) orientierte zweite Achse (Y-Y) zu versetzen,
in welcher jeder Aktuator (12, 22) einen Rotor und einen Stator aufweist, der erste Spiegel (10) rotationsverbunden mit dem Rotor (14) des ersten Aktuators (12) ist, der zweite Spiegel rotationsverbunden mit dem Rotor (24) des zweiten Aktuators (22) ist, der erste Aktuator (12) ferner angepasst ist, um den zweiten Aktuator (22) und den zweiten Spiegel (20) in Rotation um die erste Achse (X-X) zu versetzen, der Stator (23) des zweiten Aktuators (22) über einen Verbindungsarm (40), der einerseits mit dem Stator (23) des zweiten Aktuators (22) und andererseits mit dem Rotor (14) des ersten Aktuators verbunden ist, um die Rotationsachse (X-X) des ersten Spiegels (10) rotierbar montiert ist,
wobei die Zeigevorrichtung (1) **dadurch gekennzeichnet ist, dass** mindestens ein Aktuator (12, 22) relativ zu dem Spiegel (10, 20), den er in Rotation versetzt, auf der bezüglich der Seite der reflektierenden Hauptfläche (11, 21) entgegengesetzten Seite des Spiegels angeordnet ist, und dadurch, dass die Rotationsachsen der Spiegel miteinander einen Winkel bilden, der zwischen 60 und 75° ist, und
dadurch, dass der erste Spiegel (10) an dem Verbindungsarm (40) angebracht ist, und der Verbindungsarm (40) so gestaltet ist, dass der zweite Aktuator (22) sich entlang der Rotationsachse (Y-Y) des zweiten Spiegels (20) auf der bezüglich der Seite der reflektierende Hauptfläche (11) entgegengesetzten Seite des ersten Spiegels (10) erstreckt, und die Zeigevorrichtung (1) ferner einen zweiten Verbindungsarm (50) aufweist, der den zweiten Spiegel (20) und den Rotor (24) des zweiten Aktuators (22) verbindet.

2. Zeigevorrichtung (1) nach Anspruch 1, in welcher der Stator jedes Aktuators (12, 22) zylindrisch ist und der Rotor eine in dem jeweiligen Stator rotierbar montierte Vollwelle ist.

3. Zeigevorrichtung (1) nach einem der vorstehenden Ansprüche, ferner aufweisend einen Träger (30), der angepasst ist, um an einer Trägerwand (70) angebracht zu werden, wobei der Träger (30) den ersten Aktuator (12) trägt.

4. Zeigevorrichtung (1) nach einem der vorstehenden Ansprüche, ferner aufweisend zwei Abschirmplatten (60), die jeweils mit dem jeweiligen Spiegel (10, 20) verbunden sind.

5. Zeigevorrichtung nach einem der vorstehenden Ansprüche, in welcher die Rotationsachsen der Spiegel miteinander einen Winkel zwischen 65 und 75° bilden.

6. Anordnung aufweisend eine Zeigevorrichtung (1) nach einem der Ansprüche 1 bis 5 und eine Trägerwand (70), an der die Zeigevorrichtung (1) angebracht ist,
wobei die Anordnung ferner eine Verriegelungsvorrichtung (80, 81, 82, 83) aufweist, die angepasst ist, um in einer Verriegelungsposition, in der die Rotationsachse (Y-Y) des zweiten Spiegels (20) sich parallel zu der Trägerwand (70) erstreckt, die erste Rotationsachse (X-X) in zwei entgegengesetzte Rotationsrichtungen rotativ zu arretieren.

7. Anordnung nach dem vorstehenden Anspruch, in welcher die Rotationsachsen der Spiegel der Zeigevorrichtung miteinander einen Winkel zwischen 65 und 75° bilden.

8. Anordnung nach einem der Ansprüche 6 oder 7, in welcher die Verriegelungsvorrichtung einen Vorsprung (81) und einen zum Festhalten des Vorsprungs (81) bereitgestellten Halteteil (83) aufweist, wobei von dem Vorsprung (81) und dem zum Festhalten des Vorsprungs (81) bereitgestellten Halteteil (83) der eine fest an dem Stator (23) des zweiten Aktuators angebracht ist und der andere an der Trägerwand (70) angebracht ist, wobei der zum Festhalten des Vorsprungs (81) bereitgestellte Halteteil angepasst ist, um den Vorsprung in Eingriff oder Auflage in dem Halteteil (83) aufzunehmen, um so eine Rotation um die erste Achse (X-X) in eine erste Rotationsrichtung zu verhindern.

9. Anordnung nach Anspruch 8, in welcher die Verriegelungsvorrichtung aufweist: einen Haken (80), der um die Rotationsachse (Y-Y) des zweiten Spiegels (20) rotierbar angebracht ist, und einen zum Festhalten des Hakens bereitgestellten Halteteil (84), der an der Trägerwand (70) angebracht und angepasst ist, um, wenn der Vorsprung (81) in Eingriff oder Auflage in dem zum Festhalten des Vorsprungs (81) bereitgestellten Halteteil (83) ist, den Haken (80) aufzunehmen und eine Rotation um die erste Achse (X-X) in eine zweite Rotationsrichtung, die entgegengesetzt zur ersten ist, zu verhindern.

10. Anordnung nach einem der Ansprüche 6 bis 9, in welcher die Trägerwand eine durchgehende Öffnung (71) aufweist, die derart gestaltet ist, um den Übergang der Zeigevorrichtung (1) zwischen einer ersten Position, in der sich der zweite Spiegel (20) und sein Aktuator (22) auf der gleichen Seite der Trägerwand (70) wie der erste Spiegel (10) erstrecken, und einer Position, in der sie sich auf der bezüglich des ersten Spiegels (10) anderen Seite der Trägerwand (70) erstrecken, zu erlauben.

11. Anordnung nach einem der Ansprüche 6 bis 10, ferner aufweisend einen Laser-Emitter/Empfänger (90), wobei die Zeigevorrichtung (1) angepasst ist, den von dem Laser-Emitter/Empfänger erzeugten Laserstrahl hin zu einem bestimmten Ziel zu orientieren oder einen von dem Ziel herkommenden Laserstrahl hin zu dem Laser-Emitter/Empfänger zu orientieren.

12. Anordnung nach einem der Ansprüche 6 bis 11, ferner aufweisend einen optischen Sensor (91), wobei die Zeigevorrichtung (1) angepasst ist, um die optische Achse des optischen Sensors hin zu einem bestimmten Ziel zu orientieren.

## Claims

1. A pointing device (1) comprising:
- a first mirror (10), including a main reflective face (11), and arranged to reflect rays respectively from or towards a fixed point (90, 91),
- a first actuator (12) adapted to rotate the first mirror (10) around a first axis (X-X) directed towards the fixed point (90, 91),
- a second mirror (20), including a main reflective face (21), and arranged to reflect rays reflected by the first mirror towards a moving target and vice versa, and
- a second actuator (22) adapted to rotate the second mirror (20) around a second axis (Y-Y), oriented towards the first mirror (10),
wherein each actuator (12, 22) includes a rotor and a stator, the first mirror (10) is integral in rotation with the rotor (14) of the first actuator (12), the second mirror is integral in rotation with the rotor (24) of the second actuator (22), the first actuator (12) is further adapted to rotate the second actuator (22) and the second mirror (20) around the first axis (X-X), the stator (23) of the second actuator (22) being rotatably mounted around the axis of rotation (X-X) of the first mirror (10) via a connecting arm (40) integral with said stator (23) of the second actuator (22) on the one hand, and the rotor (14) of the first actuator on the other hand,
the pointing device (1) being **characterised in that** at least one actuator (12, 22) is disposed, relative to the mirror (10, 20) which it rotates, on the opposite side of the mirror relative to the side of its main reflective face (11, 21), **in that** the axes of rotation of the mirrors form therebetween an angle comprised between 60 and 75°, and
**in that** the first mirror (10) is mounted on the connecting arm (40), and the connecting arm (40) is shaped so that the second actuator (22) extends, along the axis of rotation (Y-Y) of the second mirror (20), on the side of the first mirror (10) opposite to the side of its main reflective face (11), and the pointing device (1) further includes a second connecting arm (50) connecting the second mirror (20) and the rotor (24) of the second actuator (22).

2. The pointing device (1) according to claim 1, wherein the stator of each actuator (12, 22) is cylindrical and the rotor is a solid shaft mounted to rotate in the respective stator.

3. The pointing device (1) according to one of the preceding claims, further including a support (30) adapted to be fixed on a support wall (70), the support (30) carrying the first actuator (12).

4. The pointing device (1) according to one of the preceding claims, further comprising two baffles (60) integral respectively with each mirror (10, 20).

5. The pointing device according to one of the preceding claims, wherein the axes of rotation of the mirrors form therebetween an angle comprised between 65 and 75°.

6. An assembly comprising a pointing device (1) according to one of claims 1 to 5, and a support wall (70) on which the pointing device (1) is mounted,
the assembly further comprising a locking device (80, 81, 82, 83) adapted to stop the first axis of rotation (X-X) from rotating in two opposite directions of rotation, in a locking position wherein the axis of rotation (Y-Y) of the second mirror (20) extends parallel to the support wall (70).

7. The assembly according to the preceding claim, wherein the axes of rotation of the mirrors of the pointing device form therebetween an angle comprised between 65 and 75°.

8. The assembly according to one of claims 6 or 7, wherein the locking device comprises a protuberance (81), and a protuberance (81) retaining member (83), one of the protuberance (81) and the protuberance retaining member (83) being mounted integrally with the stator (23) of the second actuator, and the other being mounted on the support wall (70), the protuberance retaining member being adapted to receive the protuberance engaged or resting in the retaining member (83), so as to prevent rotation around the first axis (X-X) in a first direction of rotation.

9. The assembly according to claim 8, wherein the locking device comprises a hook (80) rotatably mounted around the axis of rotation (Y-Y) of the second mirror 20, and a hook retaining member (84) mounted on the support wall (70), adapted to receive the hook (80) when the protuberance (81) is engaged or resting in the protuberance retaining member (83), and to prevent rotation around the first axis (X-X) in a second direction of rotation opposite to the first.

10. The assembly according to one of claims 6 to 9, wherein the support wall includes a through orifice (71) shaped in such a way as to allow switching the pointing device (1) from a first position wherein the second mirror (20) and its actuator (22) extend on the same side of the support wall (70) as the first mirror (10), and a position wherein they extend on the opposite side of the support wall (70) relative to the first mirror (10).

11. The assembly according to one of claims 6 to 10, further comprising a laser emitter/receiver (90), the pointing device (1) being adapted to direct the laser beam generated by the laser emitter/receiver towards a determined target or to direct a laser beam coming from the target towards the laser emitter/receiver.

12. The assembly according to one of claims 6 to 11, further including an optical sensor (91), the pointing device (1) being adapted to orient the optical axis of the optical sensor towards a determined target.
